# EUROPEAN PATENT APPLICATION

(11) **EP 2 557 639 A1**
(43) Date of publication of application: **13.02.2013**
(21) Application number: 12004777.4
(22) Date of filing: 26.06.2012
(51) Int. Cl.: H01R 13/66, H01G 2/04, H01G 2/12

(54) **Connector with electric component**

(30) Priority: 11.08.2011 JP 2011175802
(71) Applicant: Sumitomo Wiring Systems, Ltd., Yokkaichi-city, Mie 510-8503 (JP)
(72) Inventor: Takemoto, Masakazu, Yokkaichi-city Mie 510-8503 (JP); Tsuchida, Yusuke, Yokkaichi-city Mie 510-8503 (JP)
(74) Representative: Müller-Boré & Partner Patentanwälte

(57) **Abstract**

An object of the present invention is to provide a connector with a capacitor in which an electrolytic solution of the capacitor can be prevented from adhering to and staying on a lead wire even if the electrolytic solution should leak out.

In a connector C with a capacitor in which a capacitor 20 is incorporated, terminal fittings 10 held in a housing 30 and lead wires 22 of the capacitor 20 are connected, and spaces S2 are formed around the bases of the lead wires 22 projecting from a main body 21 of the capacitor 20. According to such a configuration, even if an electrolytic solution should leak out from the capacitor 20, the electrolytic solution spreads away from the lead wires 22 into the spaces S2 formed around the bases of the lead wires 22. Thus, the electrolytic solution can be prevented from adhering to and staying on the lead wires 22.

## Description

The present invention relates to a connector with an electric component such as a capacitor.

Conventionally, a connector with a capacitor in which the capacitor is incorporated is, for example, known as a connector for removing noise of an electrical/electronic device or the like mounted in an automotive vehicle or the like. A known connector with a capacitor of this type is such that a terminal fitting and a lead wire of the capacitor are connected in a case-like housing and the capacitor is sealed by filling epoxy resin or the like into the housing (see, for example, Japanese Unexamined Patent Publication No. 2001-23860).

An electric component such as a capacitor is normally so structured as to prevent an inner material or fluid such as an electrolytic solution from leaking out by a rubber plug or the like provided inside. However, the electrolytic solution may leak out for a certain cause, e.g. deterioration of the rubber plug. If the electrolytic solution of the capacitor should leak out, it may adhere to and stay on a base part of the lead wire in the connector with the capacitor configured as described above. A countermeasure has been desired since an undesirable situation such as corrosion of the lead wire may occur if the electrolytic solution adheres to and stays on the lead wire.

The present invention was completed in view of the above situation and an object thereof is to provide a connector with an electric component in which an inner material or fluid of the electric component can be prevented from adhering to and staying on a lead wire even if the inner material or fluid should leak out.

This object is solved according to the invention by the features of the independent claim. Particular embodiments of the invention are subject of the dependent claims.

According to the invention, there is provided a connector with an electric component such as a capacitor, in which the electric component is incorporated, wherein: at least one terminal fitting held in a housing and at least one lead wire of the electric component are connected; and at least one space is formed adjacent to and/or substantially around the base of the lead wire projecting from a main body of the electric component.

According to the present invention, it is possible to provide a connector with an electric component in which an inner material or fluid or liquid of the electric component (such as an electrolytic solution of the capacitor) can be prevented from adhering to and staying on a lead wire even if the inner material or fluid or liquid should leak out.

According to a specific embodiment of the invention, there is provided a capacitor in which the capacitor is incorporated, wherein a terminal fitting held in a housing and a lead wire of the capacitor are connected; and a space is formed around the base of the lead wire projecting from a main body of the capacitor. According to such a configuration, even if an electrolytic solution should leak out from the capacitor, the electrolytic solution spreads away from the lead wire into the space formed around the base of the lead wire. Thus, the electrolytic solution can be prevented from adhering to and staying on the lead wire.

Further, the housing may include a electric component accommodating wall for at least partly accommodating the main body of the electric component inside; and a lead wire insertion hole for allowing the lead wire to be led out may be formed to penetrate through the electric component accommodating wall and the lead wire and the terminal fitting are connected at an outer side of the electric component accommodating wall.

Further, a projecting end surface of the main body of the electric component from which the lead wire projects and a substantially facing surface of the electric component accommodating wall substantially facing the projecting end surface may be spaced apart by at least one spacer portion provided therebetween.

Further, the space may be formed between the projecting end surface and the facing surface.

Further, the housing may include a capacitor accommodating wall for accommodating the main body of the capacitor inside; a lead wire insertion hole for allowing the lead wire to be led out may be formed to penetrate through the capacitor accommodating wall and the lead wire and the terminal fitting may be connected at an outer side of the capacitor accommodating wall; and a projecting end surface of the main body of the capacitor from which the lead wire projects and a facing surface of the capacitor accommodating wall facing the projecting end surface may be spaced apart by a spacer portion provided therebetween and the space may be formed between the projecting end surface and the facing surface. According to such a configuration, the capacitor and the terminal fitting can be held in a predetermined positional relationship and the electrolytic solution can be prevented from adhering to and staying on the lead wire by accommodating the main body of the capacitor into the interior of the capacitor accommodating wall.

Further, the electric component accommodating wall may be formed with at least one exposing window portion for allowing the space formed between the projecting end surface and the facing surface to be open toward the outside of the electric component accommodating wall.

Further, the capacitor accommodating wall may be formed with an exposing window portion for allowing the space formed between the projecting end surface and the facing surface to be open toward the outside of the capacitor accommodating wall. According to such a configuration, the space formed around the base of the lead wire can be made wider.

Further, an inner diameter of the lead wire insertion hole may be set to be larger, preferably one size larger, than an outer diameter of the lead wire.

Further, the space may be formed at an outer side of the lead wire insertion hole.

Further, the housing may include a capacitor accommodating wall for accommodating the main body of the capacitor inside; a lead wire insertion hole for allowing the lead wire to be led out may be formed to penetrate through the capacitor accommodating wall and the lead wire and the terminal fitting may be connected at an outer side of the capacitor accommodating wall; an inner diameter of the lead wire insertion hole may be set to be one size larger than an outer diameter of the lead wire; and the space may be formed at an outer side of the lead wire insertion hole. According to such a configuration, the capacitor and the terminal fitting can be held in a predetermined positional relationship and the electrolytic solution can be prevented from adhering to and staying on the lead wire by accommodating the main body of the capacitor into the interior of the capacitor accommodating wall.

Further, the main body of the electric component substantially may be column-like and the lead wire projects in a longitudinal direction of the main body of the electric component from one end surface of the main body in the longitudinal direction.

Further, the electric component accommodating wall may include a tubular portion substantially surrounding the main body of the electric component and an end wall portion provided on one end of the tubular portion to substantially extend along the one end surface of the main body of the electric component and the lead wire insertion hole may be formed in the end wall portion.

Further, the electric component may be capable of being accommodated into the tubular portion through an opening opposite to the end wall portion with the lead wire in the lead.

Further, at least one guiding portion for guiding the lead wire from the lead wire insertion hole toward one surface of a connecting portion of the terminal fitting to be connected to the lead wire may be provided between the lead wire insertion hole and the connecting portion.

Further, the main body of the capacitor may be column-like and the lead wire may project in a longitudinal direction of the main body of the capacitor from one end surface of the main body in the longitudinal direction; the capacitor accommodating wall may include a tubular portion surrounding the main body of the capacitor and an end wall portion provided on one end of the tubular portion to extend along the one end surface of the main body of the capacitor and the lead wire insertion hole may be formed in the end wall portion; the capacitor may be capable of being accommodated into the tubular portion through an opening opposite to the end wall portion with the lead wire in the lead; and a guiding portion for guiding the lead wire from the lead wire insertion hole toward one surface of a connecting portion of the terminal fitting to be connected to the lead wire may be provided between the lead wire insertion hole and the connecting portion.

According to such a configuration, since the lead wire is arranged on the one surface of the connecting portion without coming into contact with the terminal fitting, the lead wire and the terminal fitting can be connected in a satisfactory manner by preventing the bending or the like of the lead wire caused by contact with the terminal fitting.

Further, the guiding portion may be resiliently deformable in a direction in which the lead wire and the connecting portion of the terminal fitting overlap. According to such a configuration, a situation can be prevented where the guiding portion blocks satisfactory connection between the terminal fitting and the lead wire.

Further, the guiding portion may include a leg portion substantially projecting forward from the end wall portion, a trunk portion substantially projecting from the leg portion and/or a head portion substantially projecting forward from the trunk portion.

Further, the width of the guiding portion may be substantially constant as a whole and/or slightly smaller than that of the end wall portion.

Further, the capacitor accommodating wall may be formed with one or more exposing window portions for at least partly exposing the inner space to the outside of the electric component accommodating wall and/or the inner space may be widened to communicate with an outer space.

These and other objects, features and advantages of the present invention will become more apparent upon reading of the following detailed description of preferred embodiments and accompanying drawings. It should be understood that even though embodiments are separately described, single features thereof may be combined to additional embodiments.
FIG. 1 is a plan view showing a connector with a capacitor according to an embodiment,
FIG. 2 is a side view showing the connector with the capacitor,
FIG. 3 is a rear view showing a housing in a state where the capacitor is not accommodated,
FIG. 4 is a section showing the housing in the state where the capacitor is not accommodated,
FIG. 5 is a section, corresponding to a section along A-A of FIG. 4, showing the housing in the state where the capacitor is not accommodated,
FIG. 6 is a plan view in section showing a state of accommodating the capacitor into the housing,
FIG. 7 is a plan view in section showing a state where the capacitor is accommodated in the housing,
FIG. 8 is a longitudinal section showing the state of accommodating the capacitor into the housing, and
FIG. 9 is a longitudinal section showing the state where the capacitor is accommodated in the housing.

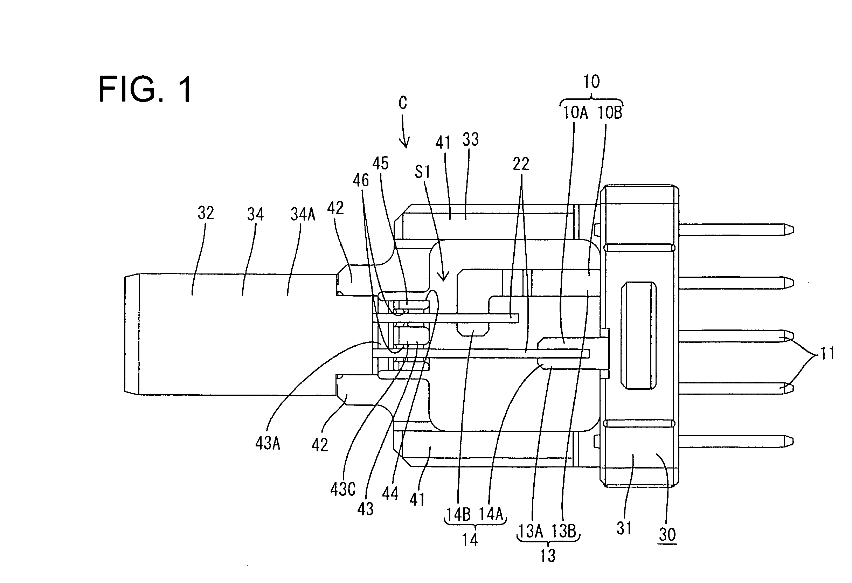

Hereinafter, one specific embodiment of the present invention is described in detail with reference to FIGS. 1 to 9.

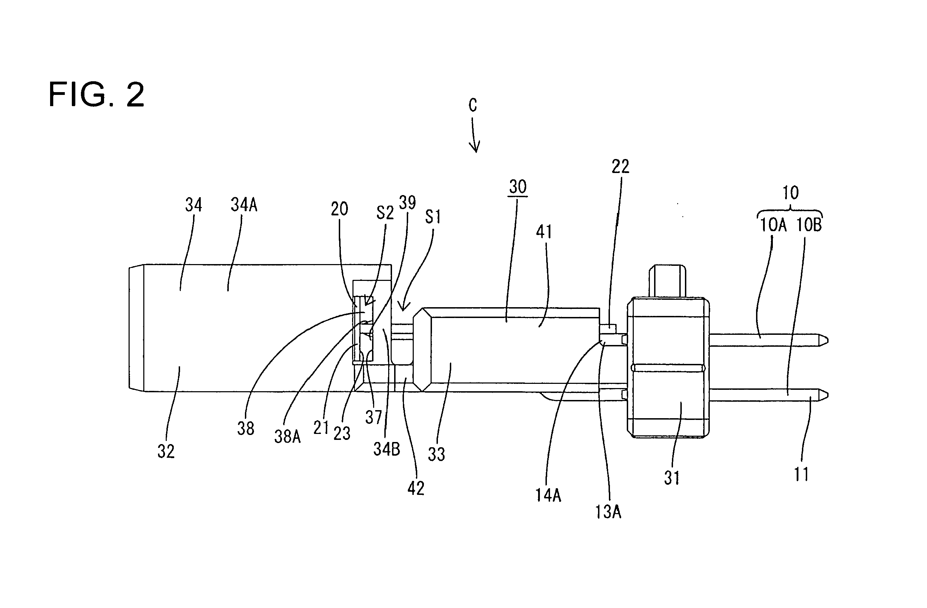

A connector C with at least one electric component such as a capacitor in this embodiment particularly is a joint connector for collectively connecting a plurality of unillustrated wires led out from an electrical/electronic device mounted in an automotive vehicle or the like. This connector C with the at least one capacitor includes positive-electrode and negative-electrode joint terminals (terminal fittings) 10 each having one or more, particularly a plurality of terminal portions 11, and at least one electric component such as a capacitor 20 is disposed between the positive- and negative-electrode joint terminals 10. In the following description, a right side of FIG. 1 (side of the connector C with the capacitor to be connected to an unillustrated mating connector) is a front side, an opposite side is a rear side, and upper and lower sides of FIG. 2 are upper and lower sides in each constituent member.

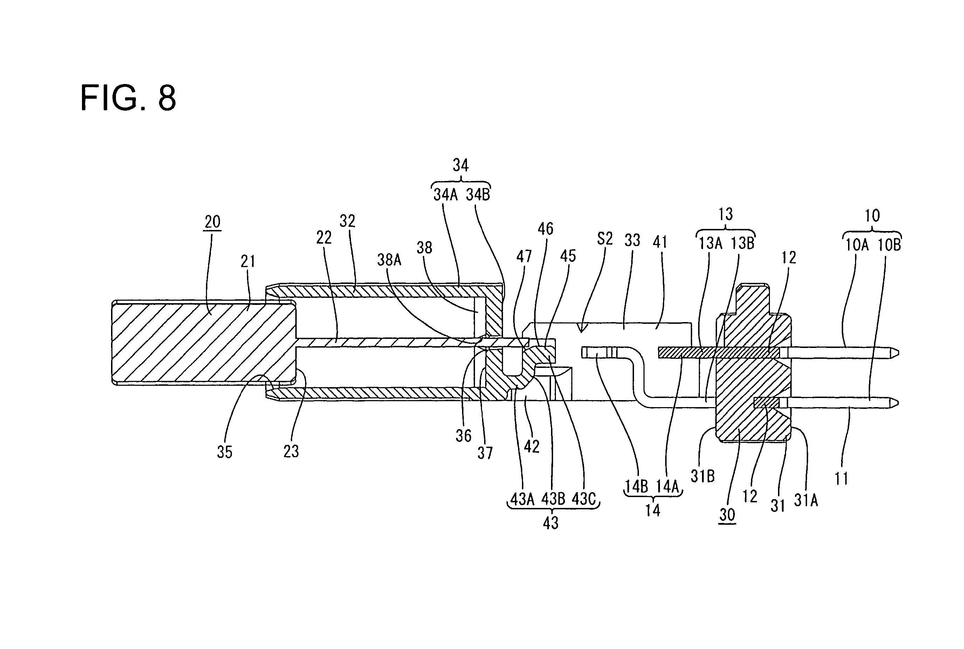

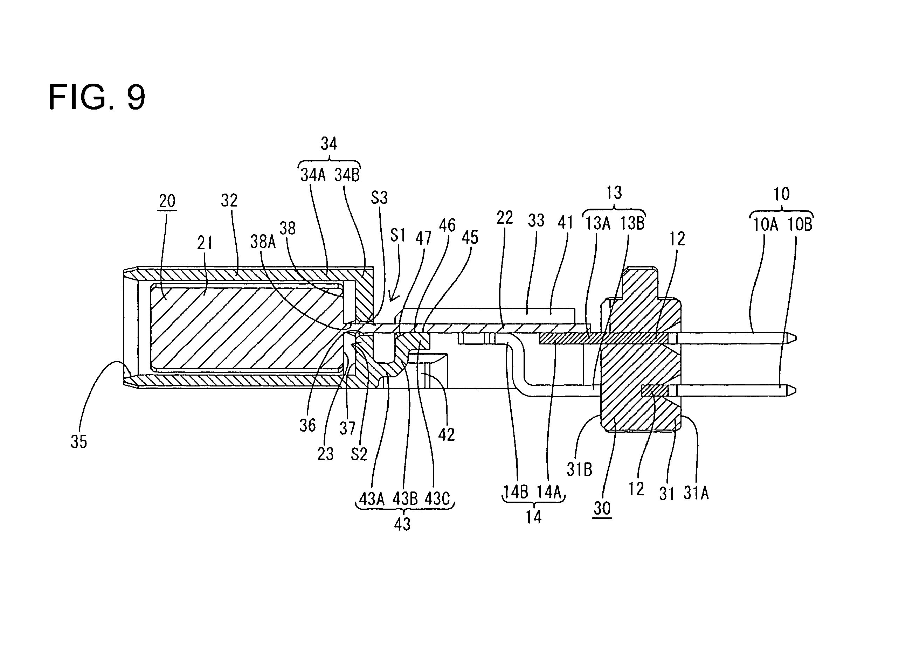

The joint terminal 10 particularly is formed by cutting or punching out an electrically conductive plate material such as metal and applying a bending, folding and/or embossing process and the like. The joint terminal 10 includes one or more, particularly a plurality of tab-shaped terminal portions 11 and a (particularly substantially strip-shaped) coupling portion 12 (see FIGS. 8 and 9) coupling these, and the terminal portions 11 project at specified (predetermined or predeterminable) intervals or pitch from at least one lateral edge of the (strip-shaped) coupling portion 12. Each terminal portion 11 is to be connected to a terminal fitting held in an unillustrated mating connector.

Further, the joint terminal 10 is formed with an extending portion 13 on an edge of the strip-shaped coupling portion 12 opposite to the terminal portions 11, and a part (particularly a leading end part) of the extending portion 13 serves as a connecting portion 14 to be connected to a lead wire 22 of the capacitor 20. The terminal portion 13 substantially extends in a direction at an angle different from 0° or 180°, preferably substantially perpendicular to the strip-shaped coupling portion 12.

As shown in FIG. 2, the pair of joint terminals 10 are arranged in one or more levels, particularly in two levels, in a thickness direction (height direction) of the housing 30. Note that the joint terminal 10 arranged in the upper level (one level) is referred to as the joint terminal 10A and that arranged in the lower level (another level) is referred to as the second joint terminal 10B.

The extending portion 13 (particularly referred to as the first extending portion 13A) of the first joint terminal 10A particularly substantially is even and flat over the entire length thereof (see FIG. 8). On the other hand, the extending portion 13 (particularly referred to as the second extending portion 13A) of the second joint terminal 10B particularly substantially is bent at an angle different from 0° or 180°, preferably substantially at a right angle at one or more positions (e.g. twice at intermediate positions) in a length direction particularly so as to arrange a leading end part thereof substantially at the same height as the first extending portion 13A. That is, the second extending portion 13B is bent e.g. upwardly at the intermediate position in the length direction and then bent to substantially extend forward at the substantially same height position as the first extending portion 13A.

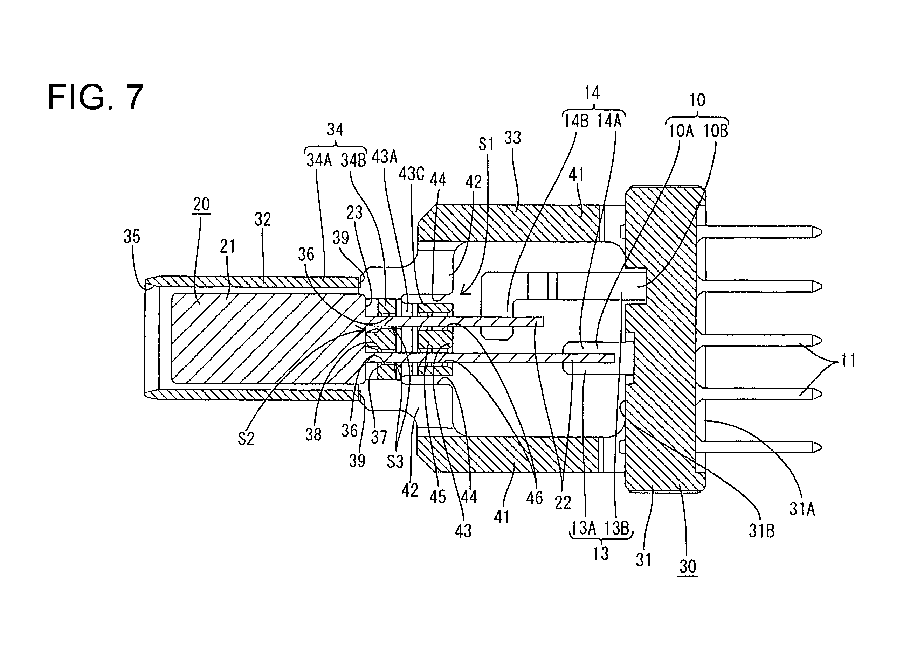

As shown in FIG. 7, the first and second extending portions 13A, 13B are arranged at a specified (predetermined or predeterminable) distance from each other in a width direction of the housing 30 and a leading end part (particularly referred to as a second connecting portion 14B) of the second extending portion 13B is located more forward than a leading end part (particularly referred to as a first connecting portion 14A) of the first extending portion 13A. In this way, the first and second connecting portions 14A, 14B are arranged at a specified (predetermined or predeterminable) distance from each other in forward and backward directions. Note that the second connecting portion 14B particularly is cut or punched out into a shape bent inwardly (toward the first connecting portion 14A) at an angle different from 0° or 180°, preferably substantially substantially at a right angle in the width direction.

The capacitor 20 as an exemplary electric component particularly is an aluminum electrolytic capacitor and includes a (particularly substantially cylindrical) capacitor main body 21 and a pair of positive and negative lead wires led out from a front end surface (one end surface in a longitudinal direction, projecting end surface) 23 of the capacitor main body 21. The lead wires 22 are in the form of (particularly substantially round) pins and/or substantially project in a substantially perpendicular direction (longitudinal direction of the capacitor main body 21) from the front end surface 23 of the capacitor main body 21 and parts (particularly leading end parts) thereof are to be connected to the connecting portions 14 of the joint terminals 10. The pair of lead wires 22 are arranged at a specified (predetermined or predeterminable) distance from each other and/or one of them is longer than the other.

The housing 30 is made e.g. of synthetic resin and particularly substantially shaped to be long and narrow in forward and backward directions as a whole, a part (particularly a front end part) thereof serves as a terminal holding portion 31 for holding the joint terminals 10 and another part (particularly a rear end part) serves as a electric component holding portion 32, specifically a capacitor holding portion 32, for holding the electric component (particularly the capacitor 20). A part of the housing 30 between the terminal holding portion 31 and the capacitor holding portion 32 serves as an electric component connecting portion (specifically as a capacitor connecting portion 33) where the joint terminals 10 and the electric component (specifically the capacitor 20) are connected. Note that the electric component holding portion (capacitor holding portion 32) particularly is located substantially in the widthwise center of the housing 30.

The terminal holding portion 31 particularly substantially is in the form of a wall long in the width direction of the housing 30 and one or more (particularly substantially strip-shaped) coupling portions 12 of the joint terminals 10 are at least partly embedded therein. The terminal portions 11 of the joint terminals 10 substantially project forward (particularly substantially side by side) from a front surface 31 A of the terminal holding portion 31 and the extending portions 13 of the joint terminals 10 substantially extend backward from a rear surface 31B of the terminal holding portion 31.

The capacitor holding portion 32 includes a capacitor accommodating wall 34 for at least partly accommodating the capacitor main body 21 inside. As shown in FIG. 9, the capacitor accommodating wall 34 includes a tubular portion 34A at least partly surrounding the capacitor main body 21 and/or an end wall portion 34B provided on one end of the tubular portion 34A in the longitudinal direction to substantially extend along the front end surface 23 of the capacitor main body 21.

The tubular portion 34A particularly substantially has a cylindrical shape extending along the outer peripheral surface of the capacitor main body 21 and/or is longitudinally formed (in an orientation that an axis line substantially coincides with a projecting direction of the terminal portions 11). The tubular portion 34A is open backward and a rear end part thereof particularly serves as an entrance 35 for the capacitor 20.

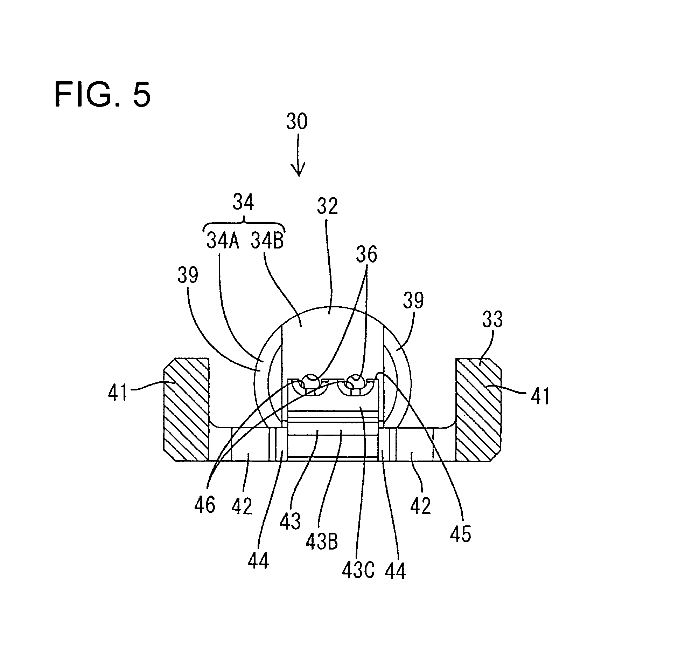

As shown in FIG. 5, the end wall portion 34B is a wall provided in a widthwise intermediate position (particularly substantially in the widthwise center) of the tubular portion 34A and/or substantially extends from the upper end to the lower end of the tubular portion 34A, and particularly substantially entirely closes an opening excluding both ends in the width direction of the tubular portion 34A. As shown in FIG. 7, one or more lead wire insertion holes 36 for allowing the one or more lead wires 22 to be led out from the capacitor accommodating wall 34 are formed to penetrate through the end wall portion 34B in forward and backward directions. Specifically, a pair of lead wire insertion holes 36 are arranged at a specified (predetermined or predeterminable) distance from each other to allow individual passage of the pair of positive and negative lead wires 22 of the capacitor 20. An inner diameter of each lead wire insertion hole 36 is set to be (e.g. one size) larger than an outer diameter of the lead wire 22, whereby a clearance (referred to as a discharge clearance S3) of a size capable of discharging an inner fluid or constituent such as an electrolytic solution is formed between the lead wire insertion hole 36 and the lead wire 22. Note that the pair of lead wire insertion holes 36 particularly are located substantially at the same height.

At least one spacer portion 38 for holding the front end surface 23 of the electric component (capacitor) main body 21 and the rear surface (surface facing the front end surface 23) of the end wall portion 34B spaced apart projects from the end wall portion 34B. By substantially bringing the front end surface 23 of the capacitor main body 21 into contact with this spacer portion 38, one or more inner spaces S2 are formed substantially around or adjacent to the bases of the lead wires 22 at least partly accommodated in the capacitor accommodating wall 34.

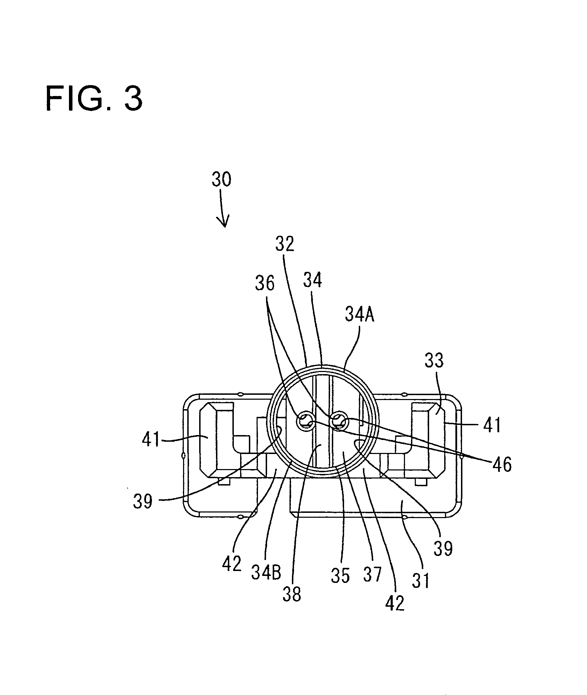

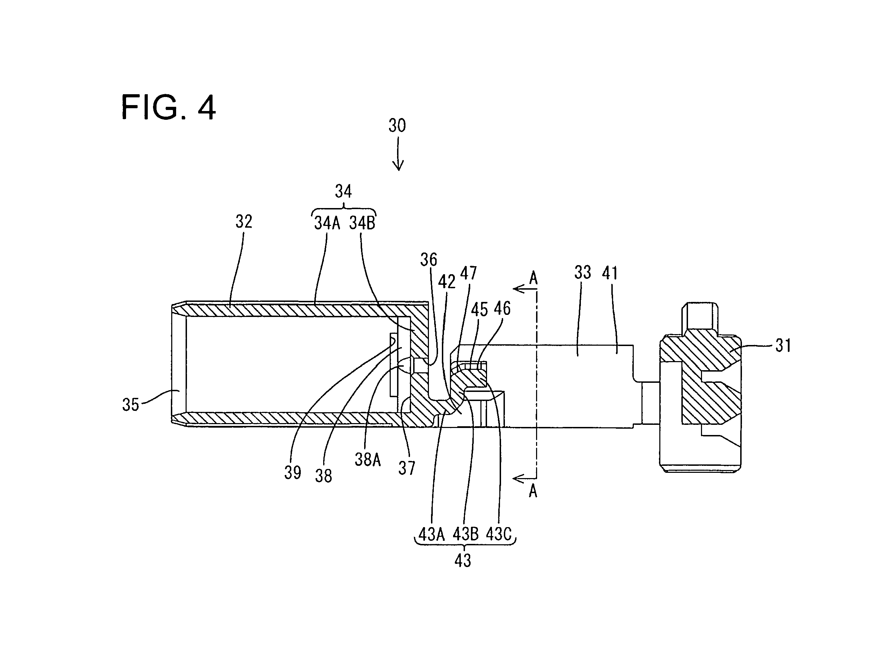

As shown in FIG. 3, the at least one spacer portion 38 particularly divides between the pair of lead wire insertion holes 36 particularly by being substantially in the form of a vertically long wall located between the pair of lead wire insertion holes 36. A projecting distance of the spacer portion 38 particularly is substantially constant in its entirety and the width thereof is slightly narrowed in a projecting direction. The spacer portion 38 particularly is recessed substantially at the same height position as the lead wire insertion holes 36, thereby forming one or more escaping portions 38A. The escaping portions 38A particularly are provided on both sides of the spacer portion 38 (see FIG. 4).

The capacitor accommodating wall 34 is formed with one or more exposing window portions 39 for at least partly exposing the inner spaces S2 to the outside of the capacitor accommodating wall 34. In this way, the inner spaces S2 are widened to communicate with an outer space S1. The exposing window portion(s) 39 particularly is/are opening(s) which penetrate(s) through the electric component (capacitor) accommodating wall 34 in inward and outward directions at one or more portions (particularly at corner portion(s)) between the tubular portion 34A and the end wall portion 34B. The exposing window portion(s) 39 is/are provided on the (particularly both) widthwise side(s) of the capacitor accommodating wall 34. As shown in FIG. 2, the exposing window portion(s) 39 particularly is/are located in a vertical central part of the electric component (capacitor) accommodating wall 34 and/or long and narrow in the vertical direction.

The capacitor connecting portion 33 includes one or more, particularly a pair of side wall portions 41 which at least partly cover the (particularly both) widthwise sides. Specifically, the pair of side wall portions 41 face substantially in parallel to each other. The front and/or rear ends of the (particularly pair of) side wall portion(s) 41 are respectively connected to the terminal holding portion 31 and the electric component (capacitor) holding portion 32. Specifically, the front end(s) of the respective side wall portion(s) 41 is/are connected to the rear surface 31 B of the terminal holding portion 31 and/or the rear end(s) thereof is/are connected to coupling portion(s) 42 provided on a lower side of the electric component (capacitor) holding portion 32. The coupling portion(s) 42 substantially extend(s) forward from the (particularly both) side(s) of the electric component (capacitor) holding portion 32.

The electric component (capacitor) connecting portion 33 is formed with a space (referred to as the outer space S1) particularly at least partly enclosed by the one or more, particularly the pair of side wall portions 41, the terminal holding portion 31 and the electric component (capacitor) holding portion 32. The outer space S1 particularly is open upward and downward. Further, as shown in FIG. 2, the rear end(s) of the side wall portion(s) 41 is/are located before the end wall portion 34B of the electric component (capacitor) accommodating wall 34 and lateral side(s) of the exposing window portion(s) 39 is/are open without being covered by the side wall portion(s) 41. Note that resin or the like particularly is not filled into the capacitor connecting portion 33, which is covered by an unillustrated cover to be mounted on the connector C with the electric component (capacitor).

At least one guiding portion 43 for substantially guiding the lead wire(s) 22 from the lead wire insertion hole(s) 36 toward the upper surface(s) of the connecting portion(s) 14 of the joint terminal(s) 10 at least partly is provided on the front side of the capacitor holding portion 32 (see FIGS. 8 and 9). The guiding portion 43 is integrally or unitarily formed to the electric component (capacitor) accommodating wall 34 and/or substantially projects forward in a cantilever manner from the end wall portion 34B. The width of the guiding portion 43 particularly is substantially constant as a whole and/or slightly smaller than that of the end wall portion 34B. One or more slits 44 long and narrow in forward and backward directions are formed adjacent to (particularly on both widthwise sides of) the guiding portion 43, thereby particularly separating the guiding portion 43 and the coupling portion(s) 42. The guiding portion 43 particularly substantially is a resiliently deformable in the vertical direction (direction in which the lead wires 22 and the connecting portions 14 of the joint terminals 10 overlap).

The guiding portion 43 includes a leg portion 43A substantially projecting forward from a lower end part of the end wall portion 34B, a trunk portion 43B substantially standing upward from the front end of the leg portion 43A and/or a head portion 43C substantially projecting forward from the upper end of the trunk portion 43B.

The leg portion 43A particularly substantially is arranged at the same height position as the coupling portion(s) 42 and/or the thickness (dimension in the vertical direction) thereof is smaller (particularly less than about two thirds, e.g. about half) than that of the coupling portion(s) 42. The trunk portion 43B face(s) substantially in parallel to the end wall portion 34B. The upper surface of the head portion 43C particularly serves as a receiving portion 45 which is arranged at a position substantially aligned with the lead wire insertion hole(s) 36 and/or the upper surface(s) of the connecting portion(s) 14 of the joint terminal(s) 10 and receives the lead wire(s) 22 projecting forward from the lead wire insertion hole(s) 36 laterally or from below. The receiving portion 45 particularly is formed with one or more, particularly a pair of receiving grooves 46 recessed substantially in conformity with the outer shapes of the respective lead wire(s) 22. The (particularly each) receiving groove 46 substantially extends straight from the lead wire insertion hole 36 toward the connecting portion 14 of the joint terminal 10. A tapered portion 47 for guiding the lead wire 22 into the receiving groove 46 particularly is formed in a rear end part of each receiving groove 46.

Next, an operation of connecting the joint terminals 10 held in the housing 30 and the lead wires 22 of the capacitor 20 is described.

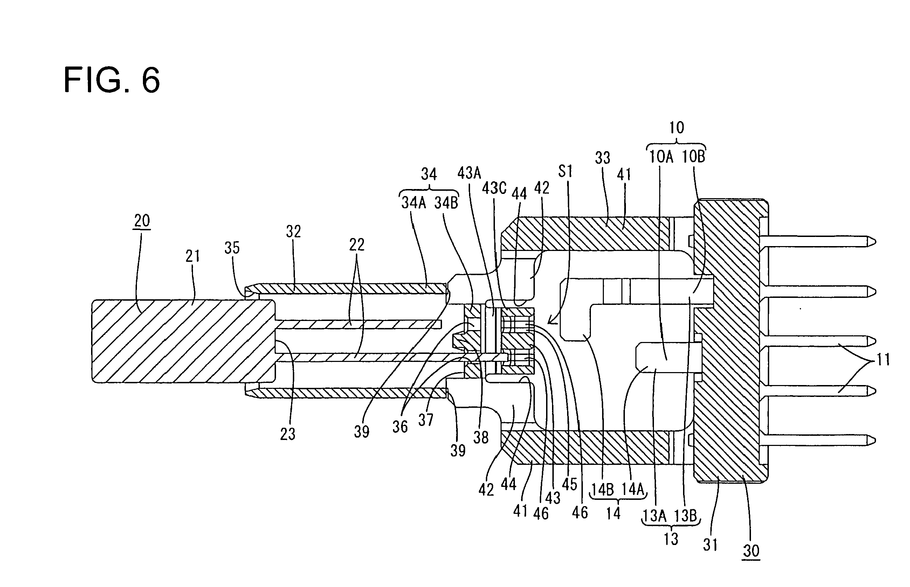

First, the electric component (such as the capacitor 20) is attached to the housing 30 in which the one or more joint terminals 10 are held. The capacitor 20 at least partly is inserted into the entrance 35 of the electric component (capacitor) accommodating wall 34 with the lead wire(s) 22 at front (in the lead). Then, as shown in FIG. 6, the (pair of) lead wire(s) 22 is/are (particularly successively) inserted into the lead wire insertion hole(s) 36 particularly from the longer one and consequently project forward through the lead wire insertion holes 36. When the electric component (capacitor 20) is moved further forward, the lead wires 22 having passed through the lead wire insertion holes 36 are successively guided into the receiving grooves 46 of the guiding portion 43 from the longer one and received by the receiving portion 45 laterally or from below. When the electric component (capacitor 20) is moved further forward, the lead wires 22 received by the receiving portion 45 substantially move straight without being deflected laterally or downwardly and are consequently arranged adjacent to (e.g. above) the connecting portions 14 of the joint terminals 10 and held in contact with the lateral (upper) surfaces of the connecting portions 14 (see FIG. 9). Note that one of the pair of lead wires 22 particularly substantially is arranged in the widthwise center of the first connecting portion 14A and the other is arranged entirely across an inwardly projecting part of the second connecting portion 14B.

Subsequently, the lead wire(s) 22 and the connecting portion(s) 14 of the joint terminal(s) 10 vertically arranged one over the other are connected e.g. by resistance welding or soldering or conductive glue. In this way, the operation of connecting the joint terminal(s) 10 held in the housing 30 and the lead wire(s) 22 of the electric component (particularly the capacitor 20) is completed.

This embodiment configured as described above achieves the following effects.

In the connector C with the capacitor of this embodiment, the inner spaces S2 and the outer space S1 are formed around the bases of the lead wires 22 projecting from the electric component (capacitor) main body 21.

Accordingly, if e.g. the electrolytic solution should leak out from the capacitor 20, the electrolytic solution spreads away from the lead wire(s) 22 toward the inner space(s) S2, further discharged to the outside of the capacitor accommodating wall 34 from the exposing window portion(s) 39 or discharged to the outside through the discharge space(s) S3 of the lead wire insertion holes 36, and spreads away from the lead wire(s) 22 toward the outer space S1. In this way, if the electrolytic solution should leak out from the capacitor 20 (or any other material should leak out from the electric component), it spreads away from the lead wire(s) 22 toward the inner space(s) S2 formed around or adjacent to the base(s) of the lead wire(s) 22 or the outer space S1. Thus, the material or fluid (e.g. the electrolytic solution) can be prevented from adhering to and staying on the lead wires 22.

Further, the at least one guiding portion 43 for guiding the lead wire(s) 22 from the lead wire insertion hole(s) 36 toward the lateral or upper surface(s) of the connecting portion(s) 14 of the joint terminal(s) 10 is provided between the lead wire insertion hole(s) 36 and the connecting portion(s) 14 of the joint terminal(s) 10. This particularly allows the lead wire(s) 22 to be arranged on the lateral or upper surface(s) of the connecting portion(s) 14 without coming into contact with the joint terminal(s) 10. Here, since the lead wires 22 are relatively soft and deformable, they may be bent when coming into contact with the joint terminals 10. If that occurs, it becomes difficult to adhere and fix the lead wires 22 and the connecting portions 14. However, according to the configuration of this embodiment, such a situation can be prevented and the lead wires 22 and the joint terminals 10 can be connected in a satisfactory manner since the lead wires 22 particularly are guided toward the upper surfaces of the connecting portions 14 by the guiding portion 43.

Further, the guiding portion 43 particularly is resiliently deformable in the overlapping direction of the lead wires 22 and the connecting portions 14 of the joint terminals 10. Here, the lead wires may have to be bent in fixing the lead wires arranged on the upper surfaces of the connecting portions, for example, if the guiding portion is not resiliently deformable in the vertical direction. Further, the connecting portions of the joint terminals may vertically vibrate relative to the lead wires vertically fixed in positions by the guiding portion and a tearing force may act on fixed parts, for example, if the connector with the capacitor vertically vibrates after the lead wires and the joint terminals are connected. However, since the guiding portion 43 follows the deformation of the lead wires 22, such situations can be prevented and a situation where the guiding portion 43 blocks satisfactory connection between the joint terminals 10 and the lead wires 22 can be prevented.

Accordingly, to provide a connector with an electric component such as a capacitor in which an inner material or fluid or liquid (such as an electrolytic solution of the capacitor) can be prevented from adhering to and/or staying on a lead wire even if the inner material or fluid or liquid (such as the electrolytic solution) should leak out, in a connector C with an electric component (such as a capacitor) in which at least one electric component, particularly a capacitor 20, is incorporated, one or more terminal fittings 10 held in a housing 30 and one or more lead wires 22 of the electric component (capacitor 20) are connected, and one or more spaces S2 are formed adjacent to or substantially around the base(s) of the lead wire(s) 22 projecting from a main body 21 of the electric component, particularly the capacitor 20. According to such a configuration, even if an electrolytic solution should leak out from the capacitor 20, the electrolytic solution spreads away from the lead wire(s) 22 into the space(s) S2 formed adjacent to or around the base(s) of the lead wire(s) 22. Thus, the electrolytic solution can be prevented from adhering to and staying on the lead wire(s) 22.

### <Other Embodiments>

The present invention is not limited to the above described and illustrated embodiment. For example, the following embodiments are also included in the technical scope of the present invention. [0041]
(1) Although the lead wires 22 of the capacitor 20 are in the form of round pins in the above embodiment, there is no limitation to this. For example, the lead wires of the capacitor may be in the form of rectangular columns or the like.
(2) Although the lead wires 22 and the joint terminals 10 are welded by resistance welding in the above embodiment, there is no limitation to this. For example, the lead wires and the joint terminals may be welded such as by laser welding or soldering.
(3) Although the lead wires 22 guided by the guiding portion 43 are held in contact with the upper surfaces of the connecting portions 14 of the joint terminals 10 in the above embodiment, there is no limitation to this. If being guided to above the connecting portions of the joint terminals by the guiding portion, the lead wires may not be necessarily held in contact with the upper surfaces of the connecting portions. In this case, the lead wires only have to be pressed in being fixed to the connecting portions of the joint terminals.
(4) Although the front end surface 23 of the capacitor main body 21 and the rear surface 37 of the end wall portion 34B are held spaced apart by the spacer portion 38 in the above embodiment, there is no limitation to this. For example, by providing a stopper or the like for preventing a forward movement of the capacitor at an intermediate position of the tubular portion of the capacitor accommodating wall instead of the spacer portion, the front end surface of the capacitor main body and the rear surface of the end wall portion may be held spaced apart.
(5) Although the guiding portion 43 projects from the end wall portion 34B in the above embodiment, there is no limitation to this. For example, the guiding portion may project from the coupling portion, the side wall portion or the like.
(6) Although the above embodiment has been described with reference to a capacitor as an exemplary electric component, it should be understood that the invention is applicable to any other electric component (e.g. a transistor, IC chip, inductance, or the like) particularly to any other component from which an inner fluid or matter may leak out.

### Reference Numerals

- C ...: connector with capacitor
- S1 ...: outer space
- S2 ...: inner space
- 10 ...: joint terminal (terminal fitting)
- 14 ...: connecting portion
- 20 ...: capacitor
- 21 ...: capacitor main body (main body of capacitor)
- 22 ...: lead wire
- 23 ...: front end surface (projecting end surface, one end surface)
- 30 ...: housing
- 34 ...: capacitor accommodating wall
- 34A ...: tubular portion
- 34B ...: end wall portion
- 36 ...: lead wire insertion hole
- 37 ...: rear surface (facing surface)
- 38 ...: spacer portion
- 39 ...: exposing window portion
- 43 ...: guiding portion

## Claims

1. A connector (C) with an electric component (20) such as a capacitor, in which the electric component (20) is incorporated, wherein:
at least one terminal fitting (10) held in a housing (30) and at least one lead wire (22) of the electric component (20) are connected; and
at least one space (S2) is formed adjacent to and/or substantially around the base of the lead wire (22) projecting from a main body (21) of the electric component (20).

2. A connector with an electric component according to claim 1, wherein:
the housing includes a electric component accommodating wall (34) for at least partly accommodating the main body (21) of the electric component (20) inside; and
a lead wire insertion hole (36) for allowing the lead wire (22) to be led out is formed to penetrate through the electric component accommodating wall (34) and the lead wire (22) and the terminal fitting (10) are connected at an outer side of the electric component accommodating wall (34).

3. A connector with an electric component according to claim 2, wherein a projecting end surface (23) of the main body (21) of the electric component (20) from which the lead wire (22) projects and a substantially facing surface (37) of the electric component accommodating wall (34) substantially facing the projecting end surface are spaced apart by at least one spacer portion (38) provided therebetween.

4. A connector with an electric component according to claim 2 or 3, wherein the space (S2) is formed between the projecting end surface (23) and the facing surface (37).

5. A connector with an electric component according to claim 4, wherein the electric component accommodating wall (34) is formed with at least one exposing window portion (39) for allowing the space (S2) formed between the projecting end surface (23) and the facing surface (37) to be open toward the outside of the electric component accommodating wall (34).

6. A connector with an electric component according to any one of the preceding claims 2 to 5, wherein an inner diameter of the lead wire insertion hole (36) is set to be larger, preferably one size larger, than an outer diameter of the lead wire (22).

7. A connector with an electric component according to any one of the preceding claims 2 to 6, wherein the space (S2) is formed at an outer side of the lead wire insertion hole (36).

8. A connector with an electric component according to any one of the preceding claims 2 to 7, wherein the main body (21) of the electric component (20) substantially is column-like and the lead wire (22) projects in a longitudinal direction of the main body (21) of the electric component (20) from one end surface (23) of the main body (21) in the longitudinal direction.

9. A connector with an electric component according to claim 8, wherein the electric component accommodating wall (34) includes a tubular portion (34A) substantially surrounding the main body (21) of the electric component (20) and an end wall portion (34B) provided on one end of the tubular portion (34A) to substantially extend along the one end surface (23) of the main body (21) of the electric component (20) and the lead wire insertion hole (36) is formed in the end wall portion (34B).

10. A connector with an electric component according to claim 9, wherein the electric component (20) is capable of being accommodated into the tubular portion (34A) through an opening opposite to the end wall portion (34B) with the lead wire (22) in the lead.

11. A connector with an electric component according to claim 9 or 10, wherein at least one guiding portion (43) for guiding the lead wire (22) from the lead wire insertion hole (36) toward one surface of a connecting portion (14) of the terminal fitting (10) to be connected to the lead wire (22) is provided between the lead wire insertion hole (36) and the connecting portion (14).

12. A connector with an electric component according to claim 11, wherein the guiding portion (43) is resiliently deformable in a direction in which the lead wire (22) and the connecting portion (14) of the terminal fitting (10) overlap.

13. A connector with an electric component according to claim 11 or 12, wherein the guiding portion (43) includes a leg portion (43A) substantially projecting forward from the end wall portion (34B), a trunk portion (43B) substantially projecting from the leg portion (43A) and/or a head portion (43C) substantially projecting forward from the trunk portion (43B).

14. A connector with an electric component according to any one of the preceding claims 11 to 13, wherein the width of the guiding portion (43) is substantially constant as a whole and/or slightly smaller than that of the end wall portion (34B).

15. A connector with an electric component according to any one of the preceding claims, wherein the capacitor accommodating wall (34) is formed with one or more exposing window portions (39) for at least partly exposing the inner space (S2) to the outside of the electric component accommodating wall (34) and/or wherein the inner space (S2) is widened to communicate with an outer space (S1).
